Europäisches Patentamt

(19) European Patent Office

Office européen des brevets

(11) Numéro de publication: **0 210 927**
A1

## (12) DEMANDE DE BREVET EUROPEEN

(21) Numéro de dépôt: 86401665.4

(22) Date de dépôt: 24.07.86

(51) Int. Cl.⁴: **H 02 K 24/00**
G 01 D 5/20

(30) Priorité: 24.07.85 FR 8511337

(43) Date de publication de la demande:
04.02.87 Bulletin 87/6

(84) Etats contractants désignés:
DE GB IT

(71) Demandeur: REGIE NATIONALE DES USINES RENAULT
Boîte postale 103 8-10 avenue Emile Zola
F-92109 Boulogne-Billancourt(FR)

(72) Inventeur: Banon, Louis
6, Square Gabriel Fauré
F-75017 Paris(FR)

(72) Inventeur: Lalangue, Pierre
Villa Cantegril Chemin de l'Hermitage
F-06600 Antibes(FR)

(74) Mandataire: Saint Martin, René et al,
Régie Nationale des Usines Renault Direction des
Recherches et Développements Service 0804 8-10,
Avenue Emile-Zola
F-92109 Boulogne Billancourt Cedex(FR)

(54) Résolveur pour repérer la position angulaire d'un organe tournant.

(57) La présente invention se rapporte à un résolveur pour le repérage de la position angulaire d'un organe tournant, comportant un rotor, un stator, un enroulement primaire auquel est appliqué une tension et des enroulements secondaires dans lesquels se développent des forces électromotrices servant à repérer la position angulaire du rotor.

Le résolveur selon l'invention est caractérisé par le fait que l'enroulement primaire est porté par deux supports plans et transversaux, liés au stator et que les enroulements secondaires sont portés par deux support plans et transversaux, liés au stator, et que lesdits enroulements coopèrent avec des armatures tournantes liées au rotor, réalisées en matériau ferromagnétique et ne possédant pas de symétrie de révolution de manière à créer chacune un entrefer axial variable.

FIG.1

0210927

# RESOLVEUR POUR REPERER LA POSITION ANGULAIRE D'UN ORGANE TOURNANT

La présente invention se rapporte à un résolveur pour le repérage de la position angulaire d'un organe tournant, comportant un rotor, un stator, un enroulement primaire auquel est appliqué une tension et des enroulements secondaires dans lesquels se développent des forces électromotrices servant à repérer la position angulaire du rotor.

Un résolveur (ou resolver), est une micromachine fournissant des tensions qui sont fonction de la position du rotor. Ces différences de potentiel caractérisent la position angulaire du rotor.

Certains résolveurs tels que celui décrit dans le brevet français 2 452 818 comportent un stator à deux enroulements et un rotor à un enroulement recevant une tension alternative sinusoïdale. Les tensions obtenues aux bornes des enroulements du stator permettent, par l'intermédiaire d'un dispositif électronique, de repérer la position angulaire du rotor. Afin d'éviter l'utilisation de contacts glissants, les techniques récentes utilisent un transformateur pour alimenter l'enroulement du rotor.

Les résolveurs connus ont une construction cylindrique avec un entrefer radial. Pour éviter les contacts glissants, il faut utiliser un transformateur. Enfin, ces résolveurs classiques comportent des bobinages statoriques et rotoriques qui doivent être effectués à la main. Ces machines sont relativement volumineuses et coûteuses. L'épaisseur mesurée selon l'axe du rotor est relativement importante.

La présente invention a pour but de fournir un résolveur à induction axiale et à réluctance variable et entrefer axial dont les bobinages sont plans et réalisés selon la technique des circuits imprimés. Ce résolveur ne comporte pas de contacts glissants, présente une faible épaisseur et ne

49398 1 1676

nécessite pas de transformateur. Grâce à la conception de ce résolveur, le courant dans l'enroulement primaire est sinusoïdal. Les parties tournantes ont une bonne tenue mécanique. Le résolveur selon l'invention peut être fixé sur un moteur de manière à être traversé par l'arbre de sortie dudit moteur, les parties tournantes du résolveur étant liées à cet arbre de sortie.

Le résolveur selon l'invention est caractérisé par le fait que l'enroulement primaire est porté par deux supports plans et transversaux, liés au stator et que les enroulements secondaires sont portés par deux supports plans et transversaux, liés au stator, et que lesdits enroulements coopèrent avec des armatures tournantes liées au rotor, réalisées en matériau ferromagnétique et ne possédant pas de symétrie de révolution de manière à créer chacune un entrefer axial variable.

Selon une caractéristique, chaque armature présente un contour formant des lobes.

Selon une caractéristique, chaque enroulement d'un support est conformé de manière à former au moins deux pôles.

Selon une autre caractéristique, chaque enroulement est formé par une bande de métal conducteur plaquée sur le support réalisé en matériau isolant.

Selon une caractéristique, chaque enroulement porté par un support est constitué par au moins deux sous-enroulements à spires imbriquées dessinant des arcs de cercles sur le support correspondant.

Selon une caractéristique, le résolveur est composé de deux parties comprenant chacune un support d'enroulement primaire, un support d'enroulement secondaire et une armature tournante.

L'invention va maintenant être décrite avec plus de détails en se référant à des modes de réalisation donnés à titre d'exemples et représentés par les dessins annexés sur lesquels :

- la figure 1 est une vue schématique éclatée d'un premier mode de réalisation du résolveur selon l'invention.

- la figure 2 est une coupe axiale du résolveur de la figure 1.

- la figure 3 est une vue schématique éclatée d'un second mode de réalisation du résolveur selon l'invention.

- la figure 4 est une coupe axiale du résolveur de la figure 3.

- la figure 5 est une coupe selon A-A des figures 2 et 4 montrant la configuration de l'enroulement conducteur.

- la figure 6 est un graphique représentant des courbes de réluctance R du circuit magnétique en fonction du temps t.

- la figure 7 est un graphique illustrant le fonctionnement.

- la figure 8 est un graphique représentant les signaux modulés obtenus aux bornes des enroulements secondaires.

En se référant aux dessins, le résolveur se compose d'un stator 1 et d'un rotor 2. Ce dernier présente un arbre 23 qui traverse les flasques du stator.

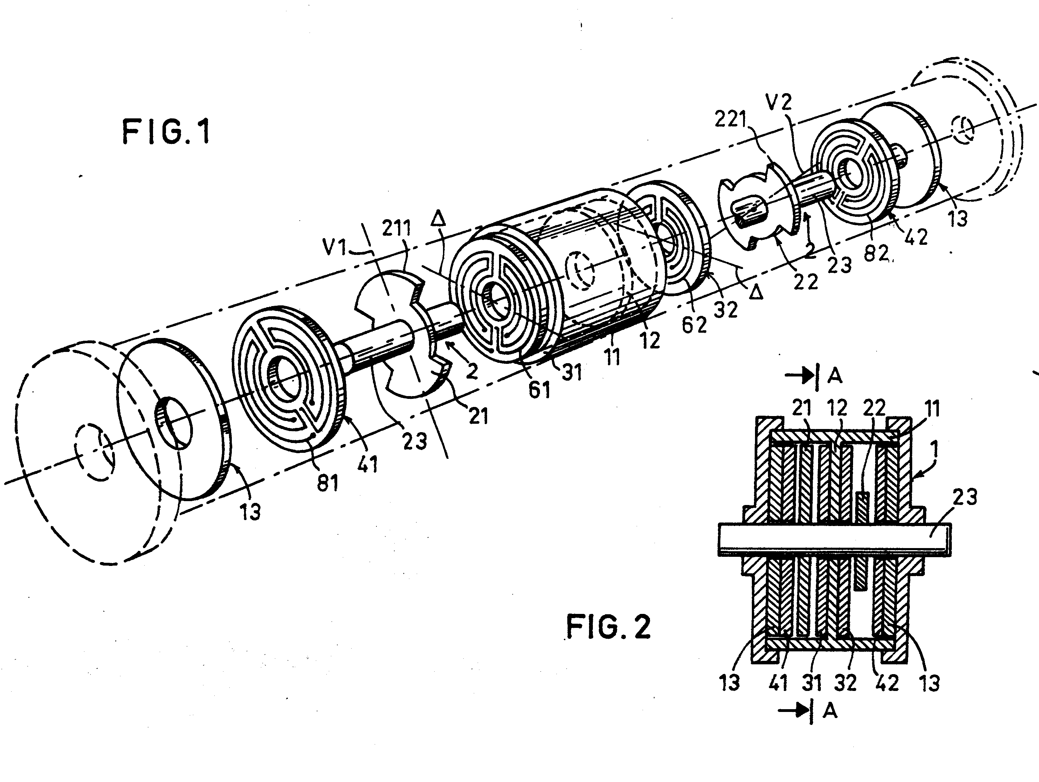

Le stator 1 est constitué par une carcasse 11 solidaire d'une culasse centrale fixe 12 en forme de disque. Par ailleurs dans le mode de réalisation de la figure 1, la carcasse est solidaire de culasses latérales fixes 13 en forme de disques.

Dans le stator sont montés deux supports d'enroulements 31, 32 portant l'enroulement primaire et deux supports d'enroulements 41 et 42 portant les enroulements secondaires.

Les disques 31 et 32 portent chacun un enroulement conducteur primaire 61 ou 62 qui reçoit le courant alternatif de la ligne et crée une induction axiale. Ces disques 31 et 32 sont appelés disques primaires ou inducteurs. Les disques 41 et 42 portent chacun un enroulement conducteur secondaire 81 et 82 où se développent des forces électromotrices. Ces disques 41 et 42 sont appelés disques secondaires.

Les disques 31, 32, 41, 42 sont perpendiculaires à l'axe du rotor et sont espacés les uns des autres. Les enroulements primaires et secondaires sont plans.

Chaque culasse 12 ou 13 est constituée d'un matériau ferromagnétique et résistif, par exemple du type ferrite doux qui possède une haute perméabilité relative et une résistivité élevée.

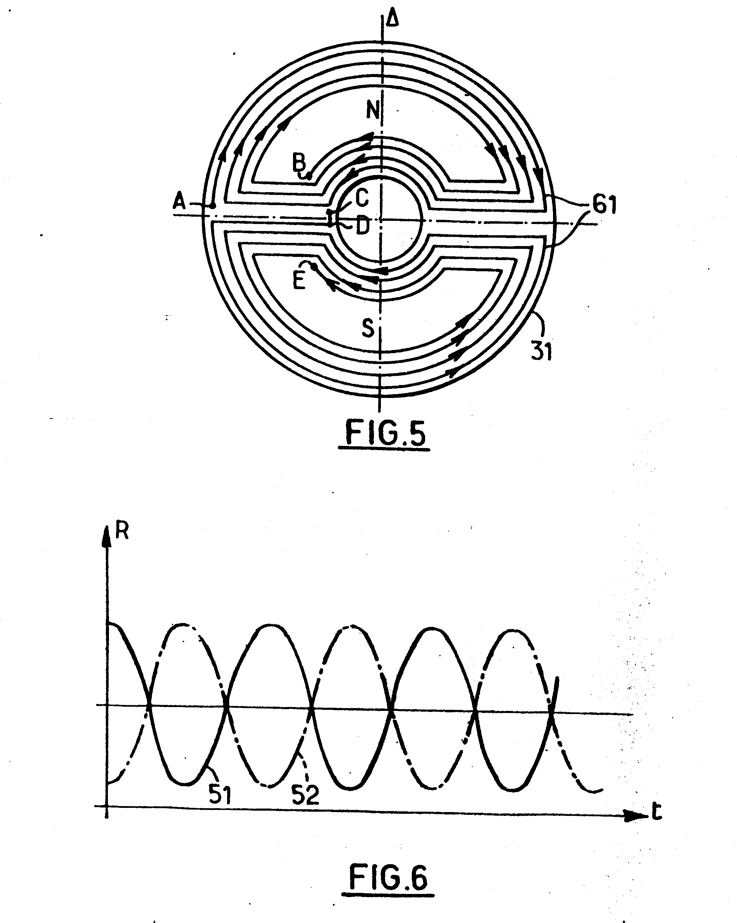

Chaque enroulement est ménagé sur une ou deux faces du disque porteur. Il est constitué par une bande de métal conducteur (cuivre) déposée sur la ou les faces enroulées en spires selon l'agencement illustré par la figure 5.

Chaque support 31, 32, 41, 42 est constitué par un matériau isolant électrique et amagnétique par exemple en bakélite. Ce support est porteur d'une bande de métal conducteur constituant l'enroulement et plaquée sur ledit support. L'ensemble de l'enroulement et du support associé peut être réalisé selon la technologie des circuits imprimés.

Dans les modes de réalisation représentés qui sont à structure bipolaire, chaque enroulement conducteur primaire disposé sur un disque primaire se compose, sur une face, de deux sous-enroulements à spires imbriquées s'étendant chacun sur une demi-couronne et, sur l'autre face, de deux sous-enroulements à spires imbriquées s'étendant chacun sur une demi-couronne. Les sous-enroulements ménagés sur une face sont connectés de manière que le sens du courant soit inversé de l'un à l'autre (sens des aiguilles d'une montre pour un observateur regardant l'enroulement supérieur - sens inverse pour l'enroulement inférieur). De cette manière un sous-enroulement occupant une demi-couronne crée un pôle nord et le sous-enroulement occupant l'autre demi-couronne crée un pôle sud. Sur une face chaque sous-enroulement forme des arcs de cercle s'étageant de la périphérie vers le centre du disque et sur l'autre face chaque sous-enroulement forme des arcs de cercle s'étageant du centre vers la périphérie. Ainsi le sous-enroulement de la face avant se termine en B où il traverse le disque et forme un sous-enroulement de la face arrière. En C l'enroulement traverse le disque et constitue le second sous-enroulement de la face avant. En E le circuit traverse le disque pour former le second sous-enroulement de la face arrière.

Les enroulements primaires 61, 62 ménagés sur les deux disques 31, 32 sont reliés en série.

Les enroulements secondaires 81, 82 des disques secondaires 41 et 42 présentent une configuration identique à celle des enroulements primaires 61 et 62 ménagées sur les disques 31 et 32. Les enroulements primaires et secondaires peuvent présenter le même nombre de spires.

Le rotor 2 est solidaire de deux armatures tournantes 21 et 22 qui ont chacune une forme non circulaire. Chaque armature 21 ou 22 présente un contour constituant deux lobes qui sont limités par des arcs de cercle 211 et 221 centrés sur l'axe du rotor et sont formés par deux encoches.

Les deux lobes de l'armature 21 sont symétriques par rapport à une droite $V_1$ concourante avec l'axe du rotor. De même les deux lobes de l'armature 22 sont symétriques par rapport à une droite $V_2$ concourante avec l'axe du rotor. Les deux armatures 21 et 22 sont montées de manière que leurs axes de symétrie $V_1$ et $V_2$ soient orthogonaux.

Les deux armatures 21 et 22 sont réalisées en matériau ferromagnétique. A titre indicatif elles peuvent être réalisées en ferrite doux de manière à éviter les pertes par hystérésis et par courants de Foucault.

Dans le mode de réalisation des figures 1 et 2, chaque armature 21 ou 22 est montée entre un disque primaire 31 ou 32 et un disque secondaire 41 ou 42. Les deux disques primaires 31 et 32 sont disposés de part et d'autre de la culasse centrale 12 à laquelle ils sont accolés. Les disques secondaires 41 et 42 sont disposés au-delà des armatures 21 et 22 et sont accolés aux culasses latérales 13. Des entrefers sont ménagés entre chaque armature 21 ou 22 et les disques 31, 41 ou 32, 42.

Les deux circuits magnétiques juxtaposés créés par les enroulements primaires 61 et 62 des disques 31 et 32 se ferment indépendamment l'un de l'autre par la culasse centrale 12. Les disques primaires et secondaires sont placés de façon à ce que les axes de leurs pôles soient convenablement décalés.

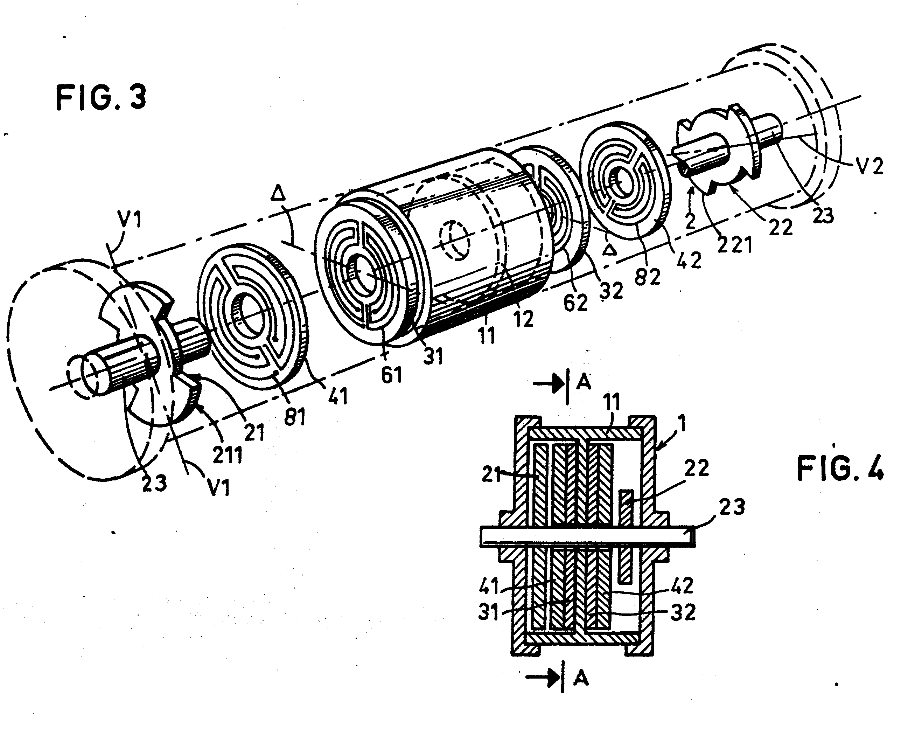

Dans le mode de réalisation des figures 3 et 4, les culasses latérales sont supprimées. Chaque disque secondaire 41 ou 42 est placé à proximité d'un disque primaire 31 ou 32. Les armatures tournantes 21 et 22 sont placées de manière à encadrer les disques secondaires 41 et 42. Les armatures 21 et 22 sont séparées des disques secondaires par des entrefers.

Le fonctionnement du résolveur selon l'invention va maintenant être expliqué.

Chaque disque primaire 31 ou 32 crée, par l'enroulement associé 61 ou 62, un champ magnétique alternatif.

Dans chaque moitié du résolveur, la réluctance du circuit magnétique varie avec la rotation de l'armature de manière sinusoïdale autour d'une valeur moyenne. Pour une moitié elle est représentée par la courbe 51 en traits pleins sur la figure 6. Pour l'autre moitié elle est représentée par la courbe 52 en traits mixtes de la figure 6. L'inductance du circuit primaire est donc constante quelle que soit la position des armatures 21 ou 22. Le courant dans les enroulements primaires est sinusoïdal.

Lorsque le flux magnétique est maximal dans une moitié du résolveur, il est minimal dans l'autre moitié.

Dans le cas d'une structure bipolaire, à chaque tour du rotor, deux périodes ont lieu. La pulsation spatiale p est alors égale à 2.

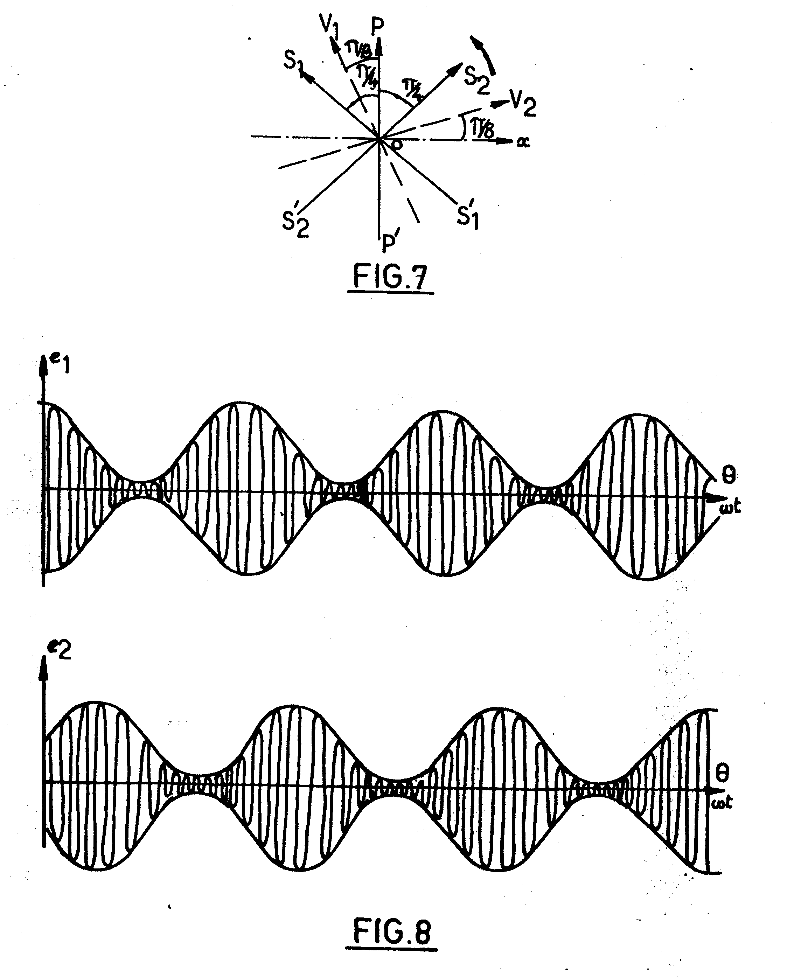

En se référant à la figure 7 on note que les enroulements primaires 61, 62 sont calés de manière que l'axe $\Delta$ (axe passant par les pôles) se confonde avec l'axe PP' par rapport auquel les angles sont repérés dans le sens trigonométrique. L'enroulement secondaire 81 de la première moitié du résolveur est calé en $S_1$ $S'_1$ à $\pi/4$ en avant par rapport à PP'. L'enroulement secondaire 82 de la deuxième moitié du résolveur est calé en $S_2$ $S'_2$ à $\pi/4$ en arrière par rapport à PP'. Lorsque l'armature 21 occupe la position $OV_1$ (correspondant à l'axe $V_1$) à $\pi/8$ en avant sur OP, l'armature 22 occupe alors la position $OV_2$ (correspondant à l'axe $V_2$) à $\pi/8$ en avant de Ox perpendiculaire à OP. Le couplage est alors maximum pour la première moitié du résolveur (réluctance minimale). Le couplage est minimal (réluctance maximale) lorsque l'armature de cette moitié du résolveur se trouve décalée de $\pi/2$ par rapport à la position du couplage maximal.

Les deux secondaires travaillent à vide et la tension à leurs bornes est égale à la force électromotrice. Les tensions $e_1$ et $e_2$ aux bornes des secondaires illustrées par la figure 8 représentent une modulation en amplitude de la fréquence porteuse du primaire. Après démodulation, on obtient des sinusoïdes de période $2\pi/p$, déphasées de $\pi/2$ $p$ donnant cos $p$ $\Theta$ et sin $p$ $\Theta$, $p$ étant le nombre de pôles et $\Theta$ l'angle de positionnement du rotor.

Il est bien entendu que l'on peut sans sortir du cadre de l'invention imaginer des variantes et des perfectionnements de détails et de même envisager l'emploi de moyens équivalents. On peut en particulier envisager des enroulements de polarité supérieure à 2 accompagnés d'armatures tournantes comportant un nombre de lobes égal au nombre de pôles.

## REVENDICATIONS

1. Résolveur pour le repérage de la position angulaire d'un organe tournant, comportant un rotor (2), un stator (1), un enroulement primaire auquel est appliqué une tension et des enroulements secondaires dans lesquels se développent des forces électromotrices servant à repérer la position angulaire du rotor (2), caractérisé par le fait que l'enroulement primaire (61, 62) est porté par deux support plans et transversaux (31 ou 32) liés au stator (1) et que les enroulements secondaires (81, 82) sont portés par deux supports plans et transversaux (41 ou 42) liés au stator et que lesdits enroulements coopèrent avec des armatures tournantes liées (21 ou 22) au rotor qui sont en matériau ferromagnétique et ne possèdent pas de symétrie de révolution de manière à créer chacune un entrefer axial variable.

2. Résolveur selon la revendication 1, caractérisé par le fait que chaque armature (21 ou 22) présente un contour formant des lobes.

3. Résolveur selon l'une quelconque des revendications précédentes, caractérisé par le fait que chaque enroulement (61 ou 62, 81 ou 82) d'un support est conformé de manière à former au moins deux pôles.

4. Résolveur selon l'une quelconque des revendications précédentes, caractérisé par le fait que chaque enroulement est formé par une bande de métal conducteur plaquée sur le support réalisé en matériau isolant.

5. Résolveur selon l'une quelconque des revendications précédentes, caractérisé par le fait que chaque enroulement porté par un support est constitué d'au moins deux sous-enroulements à spires imbriquées dessinant des arcs de cercles sur le support correspondant.

6. Résolveur selon l'une quelconque des revendications précédentes, caractérisé par le fait qu'il est composé de deux parties comprenant chacune un support (31 ou 32) d'enroulement primaire (61 ou 62), un support (41 ou 42) d'enroulement secondaire (81 ou 82) et une armature tournante (21 ou 22).

49398 1 1676

7. Résolveur selon l'une quelconque des revendications précédentes, caractérisé par le fait que chaque armature tournante (21 ou 22) est montée entre un support (31 ou 32) d'enroulement primaire et un support (41 ou 42) d'enroulement secondaire.

8. Résolveur selon l'une quelconque des revendications précédentes, caractérisé par le fait que les armatures tournantes (21 ou 22) sont montées de manière que leurs axes de symétrie soient décalés de 90°.

9. Résolveur selon l'une quelconque des revendications précédentes, caractérisé par le fait que les enroulements primaires (61, 62) disposés sur deux supports (31, 32) sont reliés en série.

10. Résolveur selon l'une quelconque des revendications précédentes, caractérisé par le fait que le stator comporte une culasse (12) centrale fixe en forme de disque.

11. Résolveur selon la revendication 10, caractérisé par le fait que le stator comporte, de part et d'autre de la culasse centrale (12), des culasses latérales (13) fixes en forme de disques.

FIG.1

FIG.2

1/4

0210927

FIG. 3

V1

Δ

V1

23 211 21 81 41 61 31 11 12 62 32 82 42 2 221 22 23

V2

FIG. 4

A

11
1
21
22
23
41 42
31 32

A

2/4

0210927

FIG.5

FIG.6

FIG.7

FIG.8

Office européen
des brevets

**RAPPORT DE RECHERCHE EUROPEENNE**

**0210927**
Numero de la demande

EP 86 40 1665

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| Y | US-A-3 732 553 (SPEARHEAD)<br>* Résumé * | 1-5 | H 02 K 24/00<br>G 01 D 5/20 |
| Y | FR-A-2 381 284 (AGA)<br>* Page 21, revendication 1 * | 1-5 | |
| A | US-A-2 964 716 (UNITED AIRCRAFT)<br>* Figure 2; colonne 4, lignes 33-58 * | 6 | |
| A | FR-A-2 529 406 (LEP) | | |

DOMAINES TECHNIQUES
RECHERCHES (Int. Cl.4)

H 02 K
G 01 D

Le présent rapport de recherche a été établi pour toutes les revendications

| Lieu de la recherche<br>**LA HAYE** | Date d'achèvement de la recherche<br>**06-10-1986** | Examinateur<br>**HOORNAERT W.** |
|---|---|---|